(19) Europäisches Patentamt
European Patent Office
Office européen des brevets

(11) Veröffentlichungsnummer: **0 105 470**
**B1**

(12) # EUROPÄISCHE PATENTSCHRIFT

(45) Veröffentlichungstag der Patentschrift: **04.06.86**

(51) Int. Cl.⁴: **C 08 L 27/06**

(21) Anmeldenummer: **83109713.4**

(22) Anmeldetag: **28.09.83**

(54) **Thermoplastische Masse.**

(30) Priorität: **02.10.82 DE 3236514**

(43) Veröffentlichungstag der Anmeldung: **18.04.84 Patentblatt 84/16**

(45) Bekanntmachung des Hinweises auf die Patenterteilung: **04.06.86 Patentblatt 86/23**

(84) Benannte Vertragsstaaten: **BE DE FR GB NL**

(56) Entgegenhaltungen:
**EP - A - 0 025 544**
**CH - A - 459 558**
**DE - A - 1 911 883**
**FR - A - 2 225 461**
**FR - A - 2 292 741**
**US - A - 3 994 995**

(73) Patentinhaber: **HOECHST AKTIENGESELLSCHAFT, Postfach 80 03 20, D-6230 Frankfurt am Main 80 (DE)**

(72) Erfinder: **Fleischer, Dietrich, Dr., Seitersweg 19, D-6100 Darmstadt (DE)**
Erfinder: **Kainz, Jürgen, Gartenstrasse 19, D-8900 Augsburg (DE)**

**EP 0 105 470 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung betrifft transparente, leicht verarbeitbare thermoplastische Massen auf Basis von Vinylchlorid-Polymerisaten, die gleichzeitig eine gute Zähikeit und gute Licht- und Wetterbeständigkeit besitzen.

Es ist bekannt, Polyvinylchlorid und Vinylchlorid-Mischpolymerisate durch einen Zusatz von Chlorierungsprodukten von Polyolefinen, welche durch Chlorieren von Polyolefinen in wässriger Suspension oder in Salzsäure, ggf. in Anwesenheit von Kieselsäure und Siliconöl erhalten wurden und die einen Chlorgehalt von 25 bis 50 Gew.-% besitzen, zu elastifizieren. Chlorierungsprodukte mit besonders guter elastifizierenden Wirkung erhält man dabei durch Chlorierung eines Niederdruckpolyäthylens einer Dichte zwischen 0,940 und 0,955 g/cm$^3$ bei Temperaturen, die zumindest während der letzten Stufe der Chlorierung über 120°C liegen. Dabei tritt eine gute Durchchlorierung des Polyolefins ein, die für die elastifizierende Wirkung wesentlich ist. Zur Bestimmung des Masses der Durchchlorierung können vor allem die folgenden Messmethoden dienen:

1. Die Bestimmung des Rückstandswertes nach der Toluol-Aceton-Methode (Tac.) . Hierbei werden 4 g des zu prüfenden Chlorpolyäthylens in 100 ml eines Gemisches von Toluol und Aceton (1 : 1) eine Stunde unter Rückfluss erhitzt. Die Menge des unlöslichen Rückstandes, der aus nicht ausreichend chlorierten Anteilen besteht, ist ein Mass für die Durchchlorierung des Polyäthylenkorns. Je geringer der Rückstand, desto geeigneter ist das Chlorierungsprodukt für die Elastifizierung von Polyvinylchlorid.
2. Die Bestimmung des Quellwertes in Methylcyclohexan (MCH). Die Gewichtszunahme einer Probe nach 24stündiger Lagerung in Methylcyclohexan ist ebenfalls ein Mass für die Durchchlorierung des Polyäthylenkorns. Nicht ausreichend chlorierte Anteile quellen kaum. Produkte mit hohem Quellwert sind für die Elastifizierung des PVC besonders geeignet.

Chlorierte Niederdruck-Polyäthylene mit Chlorgehalten von etwa 39 Gew.-%, die unter den oben angegebenen Bedingungen hergestellt werden, haben TAc-Werte unter 40 Gew.-% und MCH-Werte über 10 Gew.-%. Mischungen von PVC mit solchen Chlorpolyäthylenen haben eine ausgezeichnete Schlagzähigkeit, aber eine schlechte Transparenz. So liegt die Transparenz einer Mischung aus 80 Gew.-% S-PVC vom K-Wert 70 und 20 Gew.-% eines chlorierten Polyäthylens mit den angegebenen Eigenschaften bei etwa 70%, während die des reinen S-PVC bei etwa 88-90% liegt.

Es hat an Versuchen nicht gefehlt, die Transparenz der Mischungen von Polyvinylchlorid mit Chlorpolyolefinen zu verbessern. So werden in der JP-A-68/25 536 schlagfeste und transparente Mischungen beschrieben, bestehend aus 95-85 Gew.-% PVC und 5-15 Gew.-% eines chlorierten Polyolefins, das einen Chlorgehalt von 20-45 Gew.-% besitzt und durch Chlorieren eines Niederdruckpolyäthylens mit einem Verzweigungskoeffizienten von 5-30 und einem Molekulargewicht von 20 000 - 200 000 bei Temperaturen unter 90°C in wässriger Suspension hergestellt wurde. Bei Verwendung eines Polyäthylens geringerer Verzweigung soll sowohl die Transparenz als auch die Schlagfestigkeit schlechter sein.

Ferner ist aus der DE-C 2 456 278 bekannt, dass thermoplastische Massen, bestehend aus

a) 95-70 Gew.-% Vinylchlorid-Polymerisat und
b) 5-30 Gew.-% eines chlorierten Polyäthylens,

in denen das chlorierte Niederdruckpolyäthylen einen Chlorgehalt von 38 bis 42 Gew.-%, einen Rückstandswert von 55-70 Gew.-% und einen Quellwert unter 1 Gew.-% aufweist und aus einem Niederdruckpolyäthylen einer Dichte zwischen 0,955 und 0,965 g/cm$^3$, eines Schmelzindex MFI 190/5 (DIN 53 735) von 20 bis 65 g/10 min durch Chlorieren in Wasser oder Salzsäure, ggf. in Gegenwart von 0 bis 2 Gew.-% Kieselsäure und 0 bis 1 Gew.-% Siliconöl, jeweils bezogen auf eingesetzes Niederdruckpolyäthylen, bei Temperaturen zwischen 50 und 120°C hergestellt wurde, wobei mindestens die letzten 10% Chlor zwischen 110 - 120°C eingeführt wurden, gegenüber den thermoplastischen Massen gemäss der obigen jap. Patentanmeldung eine verbesserte Transparenz und auch eine verbesserte Schlagzähigkeit haben. Ferner haben diese Massen eine für die Anwendung als Lichtwände, Wellplatten und Profile ausreichende Witterungsbeständigkeit. Die Zähigkeit von aus solchen hergestellten Formkörpern genügt jedoch nicht immer den Praxisanforderungen, so dass ein Bedürfnis nach Formmassen besteht, die gegenbüber den Massen gemäss der DE-C-2 456 278 Formkörper, wie Lichtwände, Wellplatten und Profile u. dgl. mit verbesserter Zähigkeit ermöglichen.

Aus der DE-A-2 937 178 sind schliesslich thermoplastische Massen bekannt, bestehend aus

A) 95-80 Gew.-% Vinylchlorid-Polymerisat und
B) 5-20 Gew.-% einer Mischung von zwei chlorierten Niederdruckpolyäthylenen, die sich u.a. hinsichtlich der Quell- und Extraktionswerte unterscheiden.

Aus Beispiel 1 in Tabelle 1 dieser DE-A ist ersichtlich, das Formkörper aus solchen Massen zwar eine bessere Zähigkeit gegenüber DE-C 2 456 278 (Versuch B in dieser Tabelle 1) haben, gleichzeitig aber auch eine verminderte Transparenz aufweisen, welche den heutigen Anforderungen nicht mehr voll genügt. Ein weiterer Nachteil der Massen gemäss dieser DE-A 2 937 178 besteht darin, dass infolge stark unterschiedlicher Brechungsindices der beiden chlorierten Niederdruckpolyäthylene, Konzentrationsschwankungen der stärker trübenden Chlorpolyäthylen-Komponente mit niedrigem Brechungsindex (Komponente $B_1$) — hervorgerufen durch Entmischung oder nicht ausreichende Homogenisierung in der Extrusionsanlage — zu schwankenden Transparenzen innerhalb des Fertigteils führt. Weiterhin besitzt die Komponente $B_1$ infolge niedriger Härte und damit grösserer Klebrigkeit eine unzureichende Rieselfähigkeit, was insbesondere bei der Herstellung der Abmischungen zu Förder- und Dosierproblemen führt.

Die Aufgabe der Erfindung bestand daher in der Bereitstellung einer thermoplastischen Masse aus Vinylchlorid-Polymerisat und chloriertem Niederdruckpolyäthylen, welche die gute Transparenz und Witterungsbeständigkeit der Massen gemäss der DE-C 2 456 278 und zusätzlich eine verbesserte Zähigkeit haben und wobei das chlorierte Niederdruckpolyäthylen darüberhinaus eine verbesserte Rieselfähigkeit gegenüber den Chlorpolyäthylen-Mischungen gemäss der DE-A 2 937 178 aufweist.

Erfindungsgemäss wird diese Aufgabe durch Zusatz eines Chlorpolyäthylens mit bestimmten Eigenschaften zu Vinylchlorid-Polymerisaten gelöst.

Gegenstand der Erfindung sind daher eine transparente, leicht verarbeitbare thermoplastische Masse mit guter Zähigkeit und Bewitterungsbeständigkeit, bestehend im wesentlichen aus

A) 97-80, vorzugsweise 92-86 Gew.-% Vinylchlorid-Polymerisat mit einem K-Wert von 60-70 und

B) 3-20, vorzugsweise 8-14 Gew.-% eines chlorierten Polyäthylens,

jeweils bezogen auf die thermoplastische Masse, die dadurch gekennzeichnet ist, dass das chlorierte Niederdruckpolyäthylen einen Chlorgehalt von 38-42 Gew.-%, vorzugsweise 40-42 Gew.-%, einen Rückstandwert von 45-85 Gew.-%, vorzugsweise 50-75 Gew.-%, (gemessen durch Extraktion mit Toluol-Aceton 1 : 1) und einen Quellwert von weniger als 3 Gew.-%, vorzugsweise kleiner 2% (gemessen in Methylcyclohexan) aufweist und aus einem Niederdruckpolyäthylen einer Dichte zwischen 0,945 bis 0,954 g/$cm^3$, eines Schmelzindex MFI 190/5 (DIN 53 735) von 0,1 - 2 g/10 min, vorzugsweise 0,3-1,5 g/10 min, eines Verzweigungsgrades von weniger als 5 Methylgruppen/1000 C-Atomen und einer reduzierten spezifischen Viskosität von 2-4 dl/g (gemessen nach ISO/R 1191 an einer 0,1%igen Lösung in Dekahydronaphthalin bei 135°C) durch Chlorieren in Wasser oder in Salzsäure, in Gegenwart von 0-2 Gew.-% Kieselsäure und 0-1 Gew.-% Silikonöl, jeweils bezogen auf eingesetztes Niederdruckpoly-äthylen, bei Temperaturen zwischen 70 - 116°C hergestellt wurde, wobei mindestens die letzten 50% Chlor, bezogen auf den Gesamtchlorgehalt, zwischen 110 und 116°C eingeführt werden.

Die erfindungsgemässe thermoplastische Masse besteht also zu 97 bis 80 Gew.-%, vorzugsweise zu 92 - 86%, aus Polyvinylchlorid oder einem Copolymerisat des Vinylchlorids mit anderen Comonomeren. Als Comonomere kommen beispielsweise in Frage:

Olefine wie Äthylen oder Propylen, Vinylester von geradkettigen oder verzweigten Carbonsäuren mit 2 bis 20, vorzugsweise 2 bis 4 Kohlenstoffatomen, wie Vinylacetat, -propionat, -butyrat, -2-äthylhexoat, -stearat oder Vinylisotridecansäureester; Vinylhalogenide, wie Vinylfluorid, Vinylidenfluorid oder Vinylidenchlorid; Vinyläther wie Vinylmethyläther; Vinylpyridin; ungesättigte Säuren, wie Malein-, Fumar-, Acryl-, Methacrylsäure und deren Mono- oder Diester mit Mono- oder Dialkoholen mit 1 bis 10 Kohlenstoffatomen; Maleinsäureanhydrid, Maleinsäureimid sowie dessen N-Substitutionsprodukte mit aromatischen, cycloaliphatischen sowie ggf. verzweigten, aliphatischen Substituenten; Acrylnitril, Styrol. Es können auch Gemische dieser Monomeren zum Einsatz kommen.

Die Menge an Comonomeren-Einheiten im VC-Copolymerisat kann bis zu 20 Gew.-% betragen, vorzugsweise liegt sie bei 1 bis 5 Gew.-%. Bevorzugt wird Suspensions- oder Masse-PVC eingesetzt.

Die restlichen 3-20 Gew.-%, vorzugsweise 8-14 Gew.-%, der thermoplastischen Masse bestehen aus den erfindungsgemäss zu verwendenden chlorierten Niederdruckpolyäthylenen, die feinteilig sind und sich gut homogen mit Vinylchlorid-Polymerisat-Pulvern mischen lassen.

Die Herstellung der erfindungsgemäss eingesetzten chlorierten Niederdruckpolyäthylene erfolgt durch Chlorierung von feinteiligem Niederdruckpolyäthylen — das ggf. bei einer Temperatur von 100°C bis zum Kristallit-Schmelzpunkt des jeweiligen Polyäthylens während einer Dauer von vorzugsweise 5 bis 300 Minuten getempert bzw. vorgesintert sein kann — in Wasser oder vorteilhafterweise in Salzsäure, die vorzugsweise 10 bis 35%ig und insbesondere 15 bis 25%ig ist. Die Menge an flüssigem Medium (Salzsäure) beträgt dabei zweckmässigerweise das 3- bis 30fache der Menge des Niederdruckpolyäthylens.

Die Temperaturführung bei der Chlorierung erfolgt zweckmässigerweise so, dass die Chlorierung beispielsweise im Temperaturbereich von 70 - 90°C begonnen und dann unter kontinuierlicher Temperatursteigerung fortgeführt und bei Temperaturen von 110 bis 116°C beendet wird. Es ist aber auch möglich, die Chlorierung nur in dem Temperaturbereich von 110 bis 116°C durchzuführen.

Wesentlich ist dabei immer nur, dass mindestens die letzten 50 Gew.-% Chlor, vorzugsweise die letzten 80 Gew.-% Chlor, zwischen 110 bis 116°C eingeführt werden.

Das als Ausgangsmaterial zur Herstellung der Zweitkomponente der erfindungsgemässen thermoplastischen Masse eingesetzte Niederdruckpolyäthylen besitzt eine Dichte im Bereich von 0,945 und 0,954 g/$cm^3$, einen Schmelzindex MFI 190/5 (DIN 53 735) von 0,1 bis 2 g/10 min, vorzugsweise 0,3 bis 1,5 g/10 min, einen Verzweigungsgrad von weniger als 5 Methylgruppen pro 1000 C-Atome, vorzugsweise 1 bis 4 Methylgruppen pro 1000 C-Atome und eine reduzierte spezifische Viskosität (gemessen nach ISO/R 1191 an einer 0,1%igen Lösung in Dekahydronaphthalin bei 135°C) von 2 bis 4 dl/g.

Unter Kieselsäure, die als Agglomerisationshemmer bei der Chlorierung anwesend sein kann, seien die verschiedenen wasserhaltigen oder wasserfreien Arten des feinporigen und vorzugsweise grossoberflächigen Siliziumdioxids verstanden, deren innere Oberfläche zweckmässigerweise im Bereich von 50 bis 400 $cm^2$/g, vorzugsweise 150 bis 300 $cm^2$/g (nach BET) liegen sollte. Die mittlere Teilchengrösse der Kieselsäure liegt im allgemeinen zwischen 1 und 50 µm.

Unter den, dem technischen Sprachgebrach zufolge als Silikonöl bezeichneten Organo-Siliciumverbindungen werden Polysiloxane verstanden, die auf die wiederkehrende Einheit der allgemeinen Formel

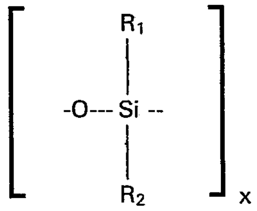

aufgebaut sind, worin $R_1$ und $R_2$ Alkylreste mit vorzugsweise 1 bis 12 C-Atomen, Arylreste mit vorzugsweise 6 oder 10 C-Atomen bzw. Aralkylreste mit 7 bis 12 C-Atomen und x eine Zahl von 10 bis 10 000, vorzugsweise 50 bis 500 bedeuten. Verbindungen aus der Reihe der Dimethylpolysiloxane haben sich als besonders wirksam gezeigt. Weitere Beispiele sind: Diäthyl-, Dipropyl-, Methyläthyl-, Dioctyl-, Dihexyl-, Methylpropyl-, Dibutyl- und Didodecylpolysiloxane. Die Viskosität liegt zweckmässigerweise zwischen 50 und 5000 $mm^2/s$ und insbesondere zwischen 70 und 1500 $mm^2/s$.

Der Antiagglomerationseffekt der Salzsäure kann durch gleichzeitigen Zusatz von Kieselsäure und Silikonöl weiter verbessert werden. Ein solcher Zusatz wird deshalb bevorzugt. In der Regel genügen 0,1 bis 2 Gew.-%, vorzugsweise 0,1 - 1 Gew.-% Kieselsäure in Verbindung mit 0,001 bis 1,0, vorzugsweise 0,02 bis 0,7 Gew.-% Silikonöl, jeweils bezogen auf eingesetztes Niederdruckpolyäthylen. Die Menge der Kieselsäure und des Silikonöls ist nach oben nicht streng begrenzt und kann die vorstehend genannten Obergrenzen unter Umständen übersteigen. Dies verbessert die Agglomerationshemmung, hat aber gewisse Nachteile für die Mischung mit PVC zur Folge.

Der Zusatz der Kieselsäurekomponente und des Polysiloxans, die ggf. vor dem Zusatz bereits miteinander gemischt werden können, erfolgt zweckmässigerweise vor oder zu Beginn der Chlorierung. Nach einer anderen Ausführungsform kann man zunächst die Kieselsäure allein zusetzen und das Silikonöl im Verlauf der Chlorierung zugeben. Eine eventuell eingetretene leichte Agglomeration lässt sich durch den späteren Silikonzusatz mindestens teilweise wieder rückgängig machen, selbst wenn er erst vor der Trocknung vorgenommen wird. Es ist selbstverständlich auch möglich, die vorgesehene Menge an Silikonöl in Portionen innerhalb einzelner oder aller Verfahrensstufen zuzusetzen.

Das so erhaltene Chlorpolyäthylen besitzt einen Rückstandswert von 45-85 Gew.-%, vorzugsweise 50-75 Gew.-% und einen Quellwert von weniger als 3 Gew.-%, vorzugsweise von weniger als 2 Gew.-%, und zeichnet sich durch gute Rieselfähigkeit (Anti-Block-Verhalten) aus. Die hierfür nach der weiter unten beschriebenen Messmethode erhaltenen Werte liegen zumeist zwischen 80 N und 150 N, vorzugsweise zwischen 100 N und 140 N.

Die erfindungsgemässe thermoplastische Masse kann zusätzlich noch die hierfür bekannten Weiterverarbeitungshilfsstoffe wie Wärme- bzw. Lichtstabilisatoren, UV-Absorber, Gleitmittel, Flammschutzmittel, Weichmacher, Farbstoffe, Pigmente sowie Antistatika in den üblichen Mengen enthalten.

Als Wärme- und Lichtstabilisatoren kommen grundsätzlich alle hierfür bei den VC-Polymerisaten bzw. Chlorpolyäthylenen bekannten Systeme in Frage. So beispielsweise übliche Barium-/Cadmiumstabilisatoren, wie komplexes Barium-/Cadmium-Laurat, die auch eine gute Witterungsstabilität gewährleisten.

Gute Ergebnisse werden beispielsweise mit 2-8 Gew.-%, vorzugsweise 4-7 Gew.-%, bezogen auf die thermoplastische Masse, einer Stabilisatormischung erhalten, bestehend aus

a) 1-2,5 Gew.-T. einer komplexen Barium-/Cadmium-Seife einer Fettsäure mit 12-18 C-Atomen,
b) 0,3-1 Gew.-T. eines Phenylalkylphosphits mit 8-12 C-Atomen in der Alkylgruppe,
c) 0,5-3 Gew.-T. eines epoxidierten Fettes z.B. epoxidiertes Leinöl oder epoxydiertes Sojaöl,
d) 0-1 Gew.-T. eines UV-Absorbers und
e) 0,5-1,0 Gew.-T. Gleitmittel wie beispielsweise Paraffinöl.

Unter komplexen Barium-/Cadmium-Verbindungen sind handelsübliche Stabilisatoren zu verstehen, die ausser den Barium-/Cadmium-Salzen noch wechselnde Mengen Polyalkohole, wie z.B. Trimethylolpropan oder Pentaerythrit und Antioxydantien, z.B. Bisphenol A, enthalten. In den Komplexen sind die Barium/Cadmium-Verbindungen etwa zu 80% vorhanden. Beispiele für die Komponente (a) der vorstehenden Stabilisatormischung sind etwa die bekannten komplexen Ba/Cd-Laurate und -Stearate.

Als Komponente (b) eignen sich sowohl die Diphenylalkylphosphite als auch die Phenyldialkylphosphite, wie beispielsweise Diphenyloctylphosphit oder Phenyldidecylphosphit. Zur Verbesserung der Lichtbeständigkeit können den Mischungen die hierfür bekannten ultraviolettes Licht absorbierenden Substanzen, wie Benzophenon- oder Benztriazol-Derivate, beispielsweise 2-(2'-Hydroxy-5'-methylphenyl)-benztriazol oder 2-(Hydroxy-3'-tertiärbutyl-5'-methylphenyl)-5-chlor-benztriazol zugegeben werden.

Als Gleitmittel eignen sich die hierfür bekannten Verbindungen, wie beispielsweise ein oder mehrere höhere aliphatische Carbonsäuren und Oxycarbonsäuren, sowie deren Ester und Amide, wie Stearinsäure, Montansäure, Glycerinmonooleat; Bisstearyl- bzw. Bis-palmitoyläthylendiamin, Montansäureester von Äthanol oder 1,3-Butandiol, Fettalkohole mit mehr als 10 Kohlenstoffatomen, sowie deren Äther, niedermolekulare Polyolefine, Paraffinöle oder Hartparaffine. Sie kommen zweckmässigerweise in Mengen von 0,1 bis 6 Gew.-%, bezogen auf die Gesamtmischung, zum Einsatz.

Als Pigmente sind beispielsweise verwendbar: Bariumsulfate, sowie weitere hitzebeständige anorganische und organische Farbpigmente.

Bezüglich des Zusatzes weiterer, hier nicht erwähnter Substanzen sei auf die Monographie von Helmut Kainer, «Polyvinylchlorid und Vinylchlorid-Mischpolymerisate», Springer-Verlag, Berlin, Heidelberg, New York, 1965, Seiten 209 bis 258 und 275 bis 329 verwiesen.

Die erfindungsgemässe thermoplastische Masse eignet sich je nach Anteil der chlorierten Niederdruckpolyäthylene für Profile, Platten, Folien und andere Formkörper. Durch ihr gleichmässig feines Korn ist sie sehr gut nach der Dry-blend-Technik verarbeitbar. Ein Mischen der Bestandteile im plastifizierten Zustand ist nicht erforderlich. Die Mischung wird vorzugsweise dort eingesetzt, wo es auf gute Transparenz, Verarbeitbarkeit und Bewitterungsstabilität ankommt.

Die Erfindung wird durch die nachstehenden Beispiele näher erläutert. Die in diesen Beispielen benutzten Grössen wurden wie folgt bestimmt:

*Rückstands(Tac)wert:* Wie einleitend beschrieben.

*Quell (MCH)wert:* Wie gleichfalls einleitend beschrieben.

*Dichte:* DIN 53 479

*Schmelzindex* (MFI 190/5): DIN 53 735

*RSV-Wert:* ISO/R 1191 (0,1%ige Lösung in Dekahydronaphthalin bei 135°C).

*Gesamtlichtdurchlässigkeit:* Bestimmung mit der Ulbrichtkugel.

In der oberen Messöffnung der Kugel (D = 50 cm) befindet sich ein Selenphotoelement in Verbindung mit einem Standard-Belichtungsmesser. Die seitlich an der Kugel angebrachte Lichteintrittsöffnung wurde durch Anbringen einer Lochblende (Durchmesser D = 7 cm) verkleinert. Als Lichtquelle dient eine 500 Watt Nitraphotlampe. Mit dem Beleuchtungsmesser wird einmal der Lichtstrom der Nitraphotlampe, der durch die Kugeleintrittsöffnung ohne vorgehaltenem Lichtwandprofil in das Innere der Kugel gelangt (= 100% Lichtdurchgang) und einmal mit vorgehaltenem Lichtwandprofil gemessen. Das Lichtwandprofil (Doppelstegplatte) hat dabei die aus anliegender Figur 1 ersichtliche Geometrie (durchstrahlte Profildicke: 2,6 mm = doppelte Wanddicke). In dieser Figur 1 bedeuten (1), (1') die Seitenwände, (2) die Querstreben, (3) eine Nut und (4) eine Feder zur Verbindung der Profilstücke über einen Schnappverschluss.

Der erhaltene Zahlenwert in Prozent gibt den visuellen Eindruck der Transparenz übereinstimmend wieder.

Durch die Prüfung am extrudierten Fertigteil ist gewährleistet, dass die Mischung unter praxisgerechten Bedingungen geprüft wird. Dies kann bei Pressplatten naturgemäss nicht der Fall sein. Beispielsweise wird in der DE-A-2 937 178, Tabelle 1, Beispiel B (Stabilisierung 2) die Transparenz einer 1 mm Pressplatte mit 83%, die optische Streuung mit 47% angegeben. Das Lichtwandprofil aus gleichem Material hat aufgeschnitten, einschalig bei gleicher Dicke von 1 mm geprüft, eine Transparenz von 83% bei einer optischen Streuung von 78%; es ist also trüber, was visuell auch unschwer erkennbar ist.

Dieser Effekt wird durch die Verarbeitungsbedingungen, z.B. durch die Verarbeitungstemperatur hervorgerufen.

*Kerbschlagzugzähigkeit:* DIN 53 448; Probekörper den Doppelstegplatten entnommen.

*Witterungsbeständigkeit:* Xenotest 450 nach DIN 53 387.

*Rieselfähigkeit/Antiblock-Verhalten:* Als Mass für die Riselfähigkeit wurde die Kraft N ermittelt, die zur Zerteilung eines bei 50°C während 4 Tagen unter einem Druck von 6500 $N/m^2$ gelagerten chlorierten Polyäthylens aufgewendet werden muss. Hierzu werden 500 g Chlorpolyäthylen in einen PVC-Zylinder von 9 cm Durchmesser belastet. Nach 4 Tagen Lagerzeit wird der Pressling entnommen und durch Auflegen von Gewichten die Kraft bestimmt, die ein «Zerfliessen» des Presslings bewirkt.

*Beispiele 1 und 2*

a) *Chlorpolyäthylen 1*

In einem 150 *l* emaillierten Kessel wurden 12 kg Niederdruckpolyäthylen einer Dichte von 0,954 $g/cm^3$, einem Verzweigungsgrad von 2,2 Methylgruppen/1000 C-Atomen und einem Schmelzindex MFI 190/5 von 0,3 g/10 min in 100 *l* 20%iger Salzsäure in Gegenwart von 0,2 Gew.-% Kieselsäure mit einer mittleren Teilchengrösse von 12 µm und einer inneren Oberfläche nach BET von 200 $cm^2/g$ und 0,02 Gew.-% Dimethylpolysiloxan mit einer Viskosität von 100 $mm^2/s$ jeweils bezogen auf die Polyäthylenmenge, beginnend bei 85°C und bei weiterer Chlorzugabe bis auf 114°C steigend, wobei zwischen 110° und 114° 80% der Chlormenge zugegeben wurden, und dann bei dieser Temperatur bis zu einem Chlorgehalt von 39,8 Gew.-% chloriert. Die Chlorierungsdauer betrug 2 h 45 min bei einer Chlorzugabe von 6 kg/h. Nach dem Abkühlen und Entspannen wird abgesaugt, mehrfach gewaschen, filtriert und bei Temperaturen bis zu 85°C getrocknet. Das erhaltene feinpulvrige Chlorpolyäthylen hat einen Tac-Wert von 75,2% und einen MCH-Wert von 1,2%.

b) *Chlorpolyäthylen 2*

In einem 150 *l* Chlorierungskessel wurden 12 kg Niederdruckpolyäthylen einer Dichte von 0,949 einem Verzweigungsgrad von 1,9 Methylgruppen / 1000 C-Atomen und einem MFI 190/5 von 1,5 g/10 min in 100 *l* 20%iger Salzsäure in Gegenwart von 0,2 Gew.-% Kieselsäure und 0,02 Gew.-% Dimethylpolysiloxan wie in Beispiel 1 beschrieben, beginnend bei 111°C und bei weiterer Chlorzugabe bis auf 114°C steigend und bei dieser Temperatur bis auf einen Chlorgehalt von 40,4 Gew.-% chloriert. Die Chlorierungsdauer betrug 2 h 40 min bei einer Chlormenge von 6 kg/h. Das wie in Beispiel 1 aufgearbeitete Chlorpolyäthylen hat einen Tac-Wert von 62% und einen MCH-Wert von 1,7%.

*Abmischung mit PVC*

Je 10 Gew.-Teile der wie oben hergestellten Chlorpolyäthylene wurden mit 90 Gew.-Teilen Suspension-PVC mit einem K-Wert von 62 und der nachfolgenden Stabilisatormischung in einem Schnellmischer bei 110°C heiss gemischt und unter Rühren auf 50°C abgekühlt. Die benutzte Stabilisatormischung hatte folgende Zusammensetzung:

2 Gew.-Teile komplexes Ba-/Cd-laurat (80 Teile Ba-/Cd-laurat, 12 Teile Trimethylolpropan, 8 Teile Bisphenol A),
0,5 Gew.-Teile Diphenylphosphit,
2 Gew.-Teile epoxidiertes Sojaöl,
0,3 Gew.-Teile 2-(2'-Hydroxi-5'-methylphenyl)-benztriazol,
0,5 Gew.-Teile Paraffinöl.

Die so gewonnenen Heissmischungen wurden auf einem Extruder mit gegenläufiger Doppelschnecke von je 85 mm Schneckendurchmesser, verbunden mit einem entsprechenden Werkzeug, zu Doppelstegplatten verarbeitet (Massetemp. im Extruder: 180 bis 190 °C), wobei das Extrudat über eine Vakuumkalibrierung ausgeformt und abgekühlt wurde. Die Doppelstegplatten (Profilgeometrie siehe Figur 1) hatten eine Wanddicke von konstant 1,3 mm und einen Stegabstand von konstant 40 mm.

An diesen Doppelstegplatten wurde die Gesamtlichtdurchlässigkeit, bezogen auf einfallendes Licht, mit der Ulbrichtkugel bestimmt.

Ferner wurde an den Doppelstegplatten die Kerbschlagzugzähigkeit gemessen.

Zur Demonstration der guten Witterungsbeständigkeit wurden die Doppelstegplatten gemäss diesen Beispielen 1 und 2 im Xenotest 450 nach DIN 53 387 künstlich bewittert. Nach 4000 h war noch keine Verfärbung zu erkennen.

*Vergleichsversuche A und B*

a) *Chlorpolyäthylen A*

In einem 150 *l* emaillierten Kessel werden 12 kg Niederdruckpolyäthylen einer Dichte von 0,954 g/cm³, einem Verzweigungsgrad von 2,2 Methylgruppen/1000 C-Atomen und einem Schmelzindex MFI 190/5 von 0,3 g/10 min in 100 *l* 20%iger Salzsäure in Gegenwart von 0,2 Gew.-% Kieselsäure mit einer mittleren Teilchengrösse von 12 µm und einer inneren Oberfläche nach BET von 200 cm²/g und 0,02 Gew.-% Dimethylpolysiloxan mit einer Viskosität von 100 mm²/s, jeweils bezogen auf die Polyäthylenmenge, beginnend bei 85 °C und bei weiterer Chlorzugabe bis auf 117 °C steigend und dann bei dieser Temperatur bis zu einem Chlorgehalt von 41,7 Gew.-% chloriert. Die Chlorierungsdauer betrug 2 h 45 min bei einer Chlorzugabe von 6 kg/h. Das wie in Beispiel 1 aufgearbeitete Chlorpolyäthylen hat einen Tac-Wert von 61% und einen MCH-Wert von 1,9%.

b) *Chlorpolyäthylen B*

In einem 150 *l* Chlorierungskessel wurden 12 kg Niederdruckpolyäthylen einer Dichte von 0,949, einem Verzweigungsgrad von 1,9 Methylgruppen/1000 C-Atomen und einem MFI 190/5 von 1,5 g/10 min in 100 *l* 20%iger Salzsäure in Gegenwart von 0,2 Gew.-% Kieselsäure und 0,02 Gew.-% Dimethylpolysiloxan beginnend bei 114 °C und bei weiterer Chlorzugabe bis auf 118 °C steigend und bei dieser Temperatur bis auf einen Chlorgehalt von 40,5 Gew.-chloriert. Die Chlorierungsdauer betrug 2 h 40 min bei einer Chlormenge von 6 kg/h. Das wie in Beispiel 1 aufgearbeitete Chlorpolyäthylen hat einen Tac-Wert von 46 Gew.-% und einen MCH-Wert von 3,3%.

*Abmischung mit PVC*

Die Abmischung mit PVC und die Stabilisierung, die Verarbeitung zu Doppelstegplatten, die Bestimmung der Gesamtdurchlässigkeit und der Kerbschlagzugzähigkeit erfolgte wie in den Beispielen 1 und 2 beschrieben. Die Ergebnisse gehen aus der Tabelle 1 hervor. Daraus ist ersichtlich, dass bei einer auf 117 °C (Vergleichsversuch A) bzw. 118 °C (Vergleichsversuch B) erhöhten Chlorierungstemperatur die Gesamtdurchlässigkeit der Doppelstegplatten deutlich reduziert wird und dabei sogar unter den Wert des nachfolgenden Vergleichsversuches C fallen.

*Vergleichsversuche C und D*

a) *Chlorpolyäthylen C*

In einem 150 *l* Chlorierungskessel wurden 12 kg eines Niederdruckpolyäthylens einer Dichte von 0,960 g/cm³ und eines Schmelzindex MFI 190/5 von 46 g/10 min in 100 *l* 20%iger Salzsäure in Gegenwart von 0,3 Gew.-% Kieselsäure mit einer mittleren Teilchengrösse von 12 µm und einer inneren Oberfläche nach BET von 200 cm²/g und 0,03 Gew.-% Dimethylpolysiloxan mit einer Viskosität von 100 Centistokes, jeweils bezogen auf die Polyäthylenmenge, beginnend bei 110 °C bis 115 °C steigend bis zu einem Chlorgehalt von 40% chloriert. Die Chlorierungsdauer betrug 2 h 35 min bei einer Chlormenge von 6 kg/h. Das wie in Beispiel 1 aufgearbeitete Chlorpolyäthylen hat einen Tac-Wert von 60% und einen MCH-Wert von 0,6%.

b) *Chlorpolyäthylen D*

In einem 150 *l* Chlorierungskessel wurden 12 kg Niederdruckpolyäthylen einer Dichte von 0,955 und eines Schmelzindex MFI 190/5 von 0,2 g/10 min in 100 *l* 20%iger Salzsäure zunächst bei 80 °C auf einem Chlorgehalt von 28% chloriert. Danach wurde die Temperatur auf 122 °C angehoben und bis zu einem Endchlorgehalt von 39,2% weiterchloriert. Die Chlorierungsdauer betrug 2 h 40 min bei einer Chlormenge von 6 kg/h. Das wie in Beispiel 1 aufgearbeitete Chlorpolyäthylen hat einen Tac-Wert von 13 Gew.-% und einen MCH-Wert von 14 Gew.-%.

*Abmischung mit PVC*

Für den *Vergleichsversuch C* wurden 90 Gew.-Teile Suspensions-PVC mit einem K-Wert von 62 mit 10 Gew.-Teilen Chlorpolyäthylen C wie bei den Beispielen 1/2 beschrieben zu Doppelstegplatten verarbeitet.

Für den *Vergleichsversuch D* wurden 90 Gew.-Teile Suspensions-PVC mit K-Wert 62 mit 5 Gew.-Teilen Chlorpolyäthylen C und 5 Gew.-Teilen Chlorpolyäthylen D wie in den Beispielen 1/2 beschrieben zu Doppelstegplatten verarbeitet.

Vergleichsversuch C ist identisch mit der Mischung von Beispiel 2 der DE-C 2 456 278; Vergleichsversuch D ist identisch mit dem Beispiel 1 in der DE-A 2 937 178.

Aus der folgenden Tabelle 1 geht hervor, dass ein Niederdruckpolyäthylen der Dichte 0,954 g/cm³ bzw. 0,949 g/cm³ unter den für Beispiel 1 und 2 gewählten Chlorierbedingungen zu einer Gesamtlichtdurchlässigkeit von 64 bzw. 65% führt, welche diejenige des Vergleichsversuchs C von 62% erreicht oder sogar übertrifft. Dies steht im Gegensatz zu den Angaben in der DE-C 2 456 278, Spalte 7, wonach ein Niederdruckpolyäthylen mit einer Dichte von 0,95 g/cm³ nicht zu einer optimalen Transparenz führen kann. Nur eine Dichte von 0,96 g/cm³ soll unter den dortigen erfindungsgemässen Bedingungen, d.h. Chlorierungstemperaturen zwischen 110-120 °C, hohem Rückstandswert und niedrigem Quellwert in Abmischung mit PVC zu guter Transparenz bei guter Schlagfestigkeit führen.

Ferner folgt aus der Tabelle 1, dass die Schlagzähigkeit der Mischungen nach Beispiel 1 und 2 mit je 150 mJ/mm$^2$ verbessert ist und die des Vergleichsversuchs C = 130 mJ/mm$^2$ deutlich übertrifft. Zwar wird schon in der DE-A 2 937 178 auf eine ebenso gute Schlagzähigkeit hingewiesen, aber die Gesamtlichtdurchlässigkeit von 54% ist mässig (siehe Vergleichsversuch D).

Durch die Erfindung nach Beispiel 1 und 2 ist es möglich, Profile mit hervorragender Gesamtlichtdurchlässigkeit und gleichzeitig guter Schlagzähigkeit herzustellen, wobei statt mit zwei Schlagzähkomponenten, wie in der DE-A 2 937 178 beschrieben, nur mit einer einzigen Komponente zu modifiziert werden braucht.

Ferner zeigen diese Beispiele 1 und 2, dass chloriertes Niederdruckpolyäthylen mit einem Verzweigungsgrad unter 5 in Mischung mit Polyvinylchlorid zu guten Zähigkeiten führt, was im Gegensatz zu den Angaben in der eingangs erwähnten japanischen Anmeldung steht. Die erreichte Zähigkeit übertrifft in beiden Fällen die von Vergleichsversuch C (entsprechend DE-C 2 456 278). In letzterer wird wiederum auf die verbesserte Zähigkeit gegenüber dem japanischen Patent hingewiesen.

Tabelle 1

| Beispiele Vergleichsversuche | *Polyäthylen-Basis* Dichte DIN 53 479 g/cm$^3$ | RSV ISO R 1191 dl/g | MFI 190/5 DIN 53 735 g/10 min | *Chlorpolyäthylen (CPE)* Type | Chlorierungstemp. Beginn °C | Ende °C | Chlorgehalt % | TAc Wert % | MCH Wert % | *Profilprüfung* Gesamtlichtdurchlässigkeit m. Ulbrichtkugel % | (90/10 Mischung) Kerbschlagzugzähigkeit (DIN 53 448) mJ/mm$^2$ |
|---|---|---|---|---|---|---|---|---|---|---|---|
| 1 | 0,954 | 4,0 | 0,3 | CPE 1 | 85 | 114 | 39,8 | 75 | 1,2 | 64 | 151 |
| 2 | 0,949 | 2,2 | 1,5 | CPE 2 | 111 | 114 | 40,4 | 62 | 1,7 | 65 | 150 |
| A | 0,954 | 4,0 | 0,3 | CPE A | 85 | 117 | 41,7 | 61 | 1,9 | 58 | 153 |
| B | 0,949 | 2,2 | 1,5 | CPE B | 114 | 118 | 40,5 | 46 | 3,3 | 61 | 150 |
| C | 0,960 | 1,3 | 46 | CPE C | 110 | 115 | 40,0 | 60 | 0,6 | 62 | 130 |
| D | 0,960 | 1,3 | 46 | CPE C | 110 | 115 | 40,0 | 60 | 0,6 | 54 | 150 |
| | 0,955 | 4,0 | 0,3 | CPE D | 80 | 122 | 39,0 | 13 | 14 | | |

*Rieselfähigkeit (Antiblock-Verhalten) der chlorierten Polyäthylene*

Das Antiblock-Verhalten, das ein Mass für die Rieselfähigkeit ist, wurde an CPE 2 (Beispiel 2) sowie an CPE D bestimmt.

Aus der folgenden Tabelle 2 ist ersichtlich, dass das Chlorpolyäthylen D (entspricht der Komponente $B_1$ der DE-A 2 937 178) infolge der niedrigeren Härte und damit einer höheren Klebrigkeit eine schlechtere Rieselfähigkeit aufweist als das erfindungsgemässe Chlorpolyäthylen nach Beispiel 2.

Tabelle 2

| Chlorpolyäthylen | TAc-Wert % | Shore-Härte A DIN 53 505 | Antiblockverhalten (Rieselfähigkeit) N | Brechungsindex DIN 53 491 $nD_{23}$ |
|---|---|---|---|---|
| CPE aus Beispiel 2 | 62 | 84 | 120 | 1,520 |
| Chlorpolyäthylen D$^+$ | 13 | 60-65 | 350 | 1,520 |

$^+$ entsprechend «$B_1$», Beispiel 1 der DE-A 2 937 178

Aus der Spalte mit der Überschrift «Brechungsindex» geht weiterhin hervor, dass das erfindungsgemäss verwendete Chlorpolyäthylen von Beispiel 2 dem Brechungsindex vom PVC mit $nD_{23}$ = 1,538 stärker angenähert ist als das Chlorpolyäthylen D. Dadurch ist sichergestellt, dass mögliche Konzentrationsschwankungen bei der Herstellung sich nicht so negativ bemerkbar machen, wie bei Verwendung einer Mischung von zwei Chlorpolyäthylen, wobei — entsprechend der DE-A 2 937 178 — sich eines der beiden Chlorpolyäthylene im Brechungsindex stärker als PVC unterscheidet.

**Patentansprüche**

1. Thermoplastische Masse bestehend im wesentlichen aus

A) 97-80 Gew.-% Vinylchlorid-Polymerisat mit einem K-Wert von 60-70 und
b) 3-20 Gew.-% eines chlorierten Niederdruckpolyäthylens

dadurch gekennzeichnet, dass das chlorierte Niederdruckpolyäthylen einen Chlorgehalt von 38-42 Gew.-%, einen Rückstandswert von 45-85 Gew.-% (gemessen durch Extrahieren mit Toluol-Aceton 1:1) und einen Quellwert von kleiner als 3 Gew.-% (gemessen in Methylcyclohexan) aufweist und aus einem Niederdruckpolyäthylen einer Dichte zwischen 0,945-0,954 g/cm$^3$, eines Schmelzindex MFI 190/5 von 0,1-2 g/10 min, eines Verzweigungsgrades von weniger als 5 Methylgruppen/1000 C-Atomen und einer reduzierten spezifischen Viskosität von 2-4 dl/g, durch Chlorieren in Wasser oder in Salzsäure, in Gegenwart von 0,2 Gew.-% Kieselsäure und 0-1 Gew.-% Silikonöl, jeweils bezogen auf eingesetztes Niederdruckpolyäthylen, bei Temperaturen zwischen 70 bis 116°C hergestellt wurde, wobei mindestens die letzten 50% Chlor, bezogen auf den Gesamtchlorgehalt, zwischen 110 und 116°C eingeführt werden.

2. Thermoplastische Masse nach Anspruch 1, dadurch gekennzeichnet, dass der Rückstandswert des chlorierten Niederdruckpolyäthylens 50-75 Gew.-% beträgt und der Quellwert kleiner als 2 Gew.-% ist.

3. Thermoplastische Masse nach Anspruch 1 und 2, dadurch gekennzeichnet, dass der Schmelzindex MFI 190/5 des Niederdruckpolyäthylens 0,3-1,5 g/10 min beträgt.

**Claims**

1. Thermoplastic composition consisting essentially of

A) 97-80% by weight of vinyl chloride polymer with a K value of from 60-70, and
B) 3-20% by weight of a chlorinated low pressure polyethylene,

characterized that the chlorinated low pressure polyethylene has a chlorine content of from 38-42% by weight, a residue value of from 45-85% by weight (measured by extraction with toluene/acetone 1 : 1) and a swelling value below 3% by weight (measured in methylcyclohexane), and which has been prepared from a low pressure polyethylene with a density between 0.945 and 0.954 g/cm$^3$, a melt flow index MFI 190/5 of from 0.1 - 2 g/10 min, a branching degree below 5 methyl groups/1000 carbon atoms and a reduced specific viscosity of from 2-4 dl/g by chlorination in water or in hydrochloric acid in the presence of 0-2% by weight of silicic acid and 0-1% by weight of silicone oil, each time calculated on the polyethylene used, at temperatures between 70° and 116°C, while introducing at least the last 50% of chlorine, calculated on the whole content of chlorine, at a temperature of from 110° to 116°C.

2. Thermoplastic composition according to claim 1, wherein the residue value of the chlorinated low pressure polyethylene is of from 50-75% weight and the swelling value below 2% by weight.

3. Thermoplastic composition according to claims and/or 2, wherein the melt flow index MFI 190/5 of the low pressure polyethylene is of from 0.3 to 1.5 g/10 min.

**Revendications**

1. Matière thermoplastique essentiellement constituée:

A) de 97 à 80% en poids d'un polymère du chlorure de vinyle qui a une valeur K de 60 à 70 et
B) de 3 à 20% en poids d'un polyéthylène basse pression chloré,

matière caractérisé en ce que le polyéthylène basse pression chloré a une teneur en chlore de 38 à 42% en poids, une valeur de résidu de 45 à 85% en poids (mesurée par extraction avec un mélange à parties égales de toulène et d'acétone) et une valeur de gonflement inférieure à 3% en poids (mesurée dans du méthyl-cyclohexane), et a été préparé à partir d'un polyéthylène basse pression qui a une masse volumique comprise entre 0,945 et 0,954 g/cm$^3$, un indice de fusion MFI 190/5 de 0,1 à 2 g/10 mn, un taux de ramification inférieur à 5 radicaux méthyles pour 1000 atomes de carbone et une viscosité spécifique réduite de 2 à 4 dl/g, par chloration dans de l'eau ou dans de l'acide chlorhydrique, en présence de 0 à 2% en poids de silice et de 0 à 1% en poids d'une huile de silicone, à chaque fois par rapport au polyéthylène basse pression mis en jeu, à des températures comprises entre 70 et 116°C, au moins les derniers 50% de chlore, par rapport à la teneur totale en chlore, étant introduits entre 110 et 116°C.

2. Matière thermoplastique selon la revendication 1, caractérisé en ce que la valeur de résidu du polyéthylène basse pression chloré est comprise entre 50 et 75% en poids et la valeur de gonflement est inférieure à 2% en poids.

3. Matière thermoplastique selon l'une des revendications 1 et 2, caractérisée en ce que l'indice de fusion MFI 190/5 du polyéthylène basse pression est compris entre 0,3 et 1,5 g/10 mn.

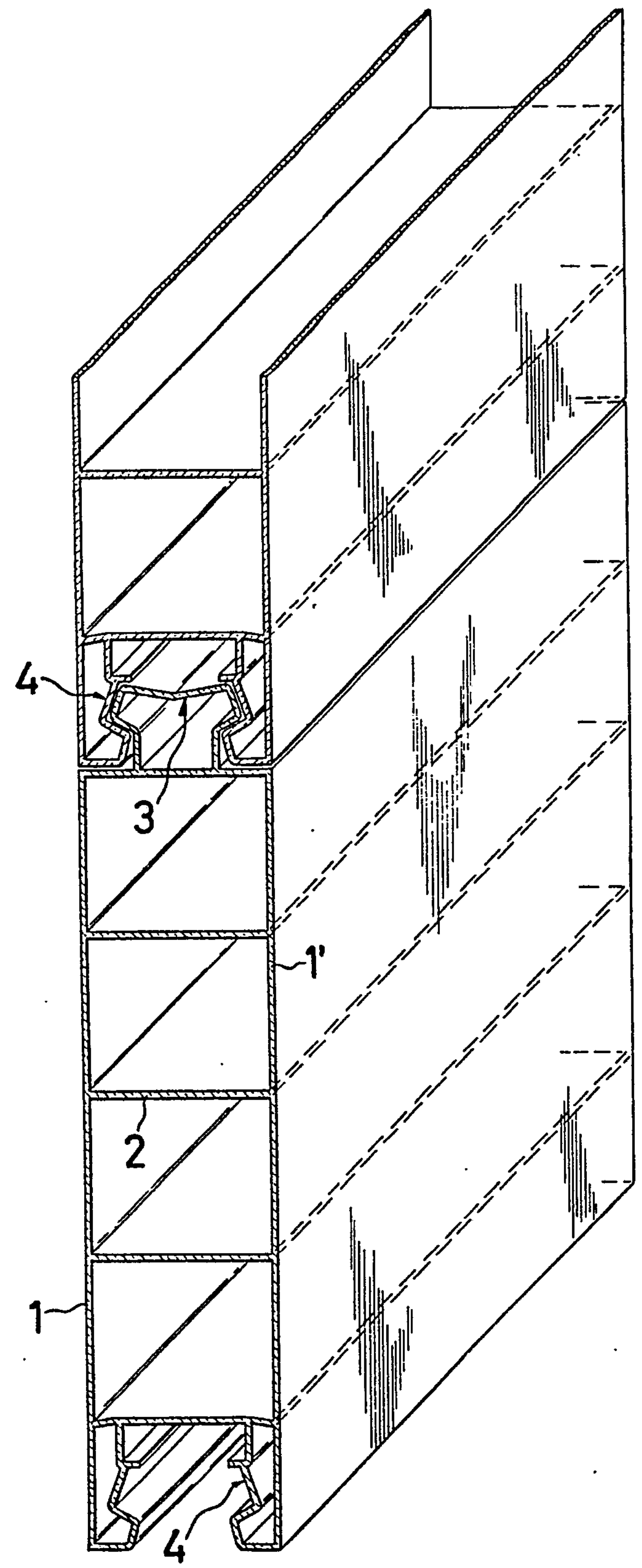
4
3
1'
2
1
4